# EUROPEAN PATENT APPLICATION

(11) **EP 0 916 925 A1**
(43) Date of publication of application: **19.05.1999**
(21) Application number: 97120134.8
(22) Date of filing: 17.11.1997
(51) Int. Cl.: G01C 9/06, G06K 11/18

(54) **Inclination sensor**

(71) Applicant: YASHIMA ELECTRIC CO., Ltd., Kyoto-shi, Kyoto 601 (JP)
(72) Inventor: Nakamura, Yuki, c/o Yashima Electric Co., Ltd., Kyoto 601 (JP)
(74) Representative: Prüfer, Lutz H., Dipl.-Phys.

(57) **Abstract**

An inclination sensor has a pen shaft holding plate (2) being permeable to light and having a circular shape which plate (2) is provided to a case body (1) which supports a pen shaft in a projecting manner, a cavity section (3) formed within the pen shaft holding plate (2) which cavity section (3) has an upper face formed as a convexly curved face, fluid body (4) having a predetermined viscosity which is housed within the cavity section (3), and a marker (5) floating within the fluid body (4) which marker (5) is impermeable to light, has a ball shape, and a specific gravity which is smaller than a specific gravity of the fluid body (4). The inclination sensor detects an inclination angle and an inclination direction of the pen shaft due to difference among individuals and writing condition based upon a position of the marker (5).

## Description

### Background of The invention

The present invention relates to an inclination sensor. More particularly, the present invention relates to an inclination sensor which is preferably employed within a handwriting detecting and storing device which writes handwriting on a paper or the like and detects and stores the handwriting in real-time.

### Related Arts

A handwriting detecting and storing device has been developed which writes a character, figure and the like on a paper or the like and detects and stores the handwriting in real-time. Such a handwriting detecting and storing device detects handwriting on a paper or the like (the surface of a medium for writing) from an upper position with respect to the paper on which a character, figure and the like is being written, using an optical element such as a lens, CCD (charge coupled device) area sensor or the like.

When a writing operation is performed by grasping such a handwriting detecting and storing device with fingers similarly to an ordinary writing operation, it is popular that the handwriting detecting and storing device is maintained at a posture which is not vertical with respect to the surface for writing, but is instead inclined to some degree with respect to the surface for writing. When a writing operation maintains the handwriting detecting and storing device at an inclined posture with respect to the surface for writing and when the handwriting on the writing surface is optically detected using a lens for example, the obtained image of the handwriting is deformed to some degree. Therefore, a correction operation for the deformation is required when the obtained image should be reproduced accurately.

One method for performing the correction operation is as follows.

A figure or the like having a known aspect ratio is previously written as a marker on a surface for writing. When an image which is obtained optically is applied image processing using a computer, a correction operation is performed using a deformation degree of the marker figure in an inverse operation manner. However, when a long sentence is being written using the handwriting detecting and storing device, an inclination angle of a grasped handwriting detecting and storing device changes. Therefore, a correction operation corresponding to the change in inclination angle is complicated and has an accuracy which is not too high.

The present invention was made in view of the above problems.

It is an object of the present invention to offer an inclination sensor which is preferably employed in a handwriting detecting and storing device which sensor can correct deformation of an image representing written information easily and accurately. The deformation of the mage depends upon an individual difference between writers and a writing condition.

### Summary of The Invention

An inclination sensor according to a first embodiment of the invention comprises a case body, a maintaining plate being permeable to light (i.e., transparent or translucent) and having a circular shape which plate is provided to the case body, a cavity section formed within the maintaining plate which section has an upper face having a curved convex shape, a fluid body having viscosity which fills the cavity section, and a marker which floats within the fluid body which marker is impermeable to light (i.e., opaque), a ball shape, and a specific gravity which is smaller than a specific gravity of the fluid body.

When this inclination sensor is employed in a handwriting detecting and storing device, and when a pen axis of the device changes depending upon a writing condition, the marker moves in a floating condition within the fluid body along the curved convex face. When the pen axis is vertical with respect to the surface for writing, for example, the marker is positioned at the uppermost position of the curved convex face (i.e., the marker is positioned in a neighboring position with respect to the pen axis). When the pen axis is inclined with respect to the surface for writing, the marker is positioned at the uppermost position of the curved convex face which is in an inclined condition. A displacement of the marker from a center (an axial center of the pen axis) is in proportion to the inclination angle of the pen axis. Therefore, an inclination angle and an inclination direction of the pen axis is easily detected based upon a length of the displacement and a position of the displacement. Then, deformation of an image which represents writing information can be corrected easily and accurately based upon the detected inclination angle and the inclination direction.

An inclination sensor according to a second embodiment of the invention comprises a case body, a maintaining plate being permeable to light (i.e., transparent or translucent) and having a circular shape which plate is provided to the case body, a cavity section formed within the maintaining plate which section has a lower face which has a curved convex shape, and a marker provided within the cavity section in a rotatable and movable manner which marker is impermeable to light (i.e., opaque) and has a ball shape.

When this inclination sensor is employed in a handwriting detecting and storing device, and when a pen axis is vertical with respect to a surface for writing, the marker is positioned at a lowermost position of the curved convex face (i.e., the marker is positioned in a neighboring position with respect to the pen axis). When the pen axis is inclined with respect to the surface for writing, the marker is positioned at the lowermost position of the curved convex face which is in an inclined condition. Therefore, an inclination angle and an inclination direction of the pen axis is easily detected based upon a length of the displacement of the marker from a center (an axial center of the pen axis) and a position of the displacement of the marker with respect to the center, which operation is similar to the operation of the first embodiment of the invention.

An inclination sensor according to a third embodiment of the invention comprises a case body, a maintaining plate being permeable to light (i.e., transparent or translucent) and having a circular shape which plate is provided to the case body, a groove having a ring shape which groove is formed in an outer peripheral section of the maintaining plate, and a marker provided within the groove in a rotatable and movable manner which marker is impermeable to light (i.e., opaque) and has a ball shape.

When the inclination sensor is employed in a handwriting detecting and storing device, the marker moves along the groove in an inclination direction of a pen axis (the marker moves to a lowermost section of the groove which is in an inclined condition), therefore an inclination direction of the pen axis is detected based upon a position to which position the marker moves. But, in this case, the marker is always positioned at a location away from the axial center of the pen axis by a constant distance. Therefore, an inclination angle of the pen axis cannot be detected.

An inclination sensor according to a fourth embodiment of the invention comprises a case body, a maintaining plate being permeable to light (i.e., transparent or translucent) and having a circular shape which plate is provided to the case body, two grooves formed on the maintaining plate each groove extending to the outer peripheral section (excepting the central section of the maintaining plate) and each extending direction differing by 90 degrees from the other, and markers provided in each groove in a rotatable and movable manner, the markers being impermeable to light (i.e., opaque) and having a ball shape.

When this inclination sensor is employed in a handwriting detecting and storing device, the two grooves are disposed to indicate an X-coordinate direction and a Y-coordinate direction. For example, each position of each marker within each groove (one groove extending in the X-coordinate direction, while the other groove extending in the Y-coordinate direction) is determined based upon an inclination condition of the pen axis. Therefore, an inclination direction of the pen axis is detected based upon the positions of the markers. But, an inclination angle of the pen axis cannot be detected.

An inclination sensor according to a fifth embodiment of the invention comprises a case body, a maintaining plate being permeable to light (i.e., transparent or translucent) and having a circular shape which plate is provided to the case body, and a marker provided to the maintaining plate which marker is impermeable to light (i.e., opaque) and has a stick shape, the marker being connected at its top edge to a upper position with respect to the maintaining plate in a swingable manner.

When this inclination sensor is employed in a handwriting detecting and storing device, the marker always points in a vertically lower direction despite an inclination degree of the pen axis so that an image corresponding to the marker moves within a detected image in correspondence with an inclination condition of the pen axis. Therefore, an inclination angle and an inclination direction of the pen axis are detected based upon the image corresponding to the marker within the detected image.

An inclination sensor according to a sixth embodiment of the invention comprises a case body, a maintaining plate being permeable to light (i.e., transparent or translucent) and having a circular shape which plate is provided to the case body, and a marker provided to the maintaining plate which marker is impermeable to light (i.e., opaque) and has a stick shape, the marker being connected at its bottom edge to a center of a upper face of the maintaining plate in a swingable manner.

When this inclination sensor is employed in a handwriting detecting and storing device, the marker can move in all directions following an inclination condition of the pen axis so that an image corresponding to the marker moves within a detected image which operation is similar to the operation of the fifth embodiment of the invention. Therefore, an inclination angle and a inclination direction of the pen axis are detected based upon a length and a position of the image which corresponds to the marker.

An inclination sensor according to a seventh embodiment of the invention comprises a case body, a reversed circular cone section which is provided in the case body, conductive liquid which is housed within a curved concave side of the reversed circular cone section, and resistance bodies each extending from the cone point (bottom center of the reversed circular cone) to the peripheral section each resistance body having a belt shape and crossing at right angle to one another. The number of the resistance bodies is more than 4, and is preferably 4.

When this inclination sensor is employed in a handwriting detecting and storing device, and when the pen axis is vertical with respect to a surface for writing, the conductive liquid within the reversed circular cone section contacts all resistance bodies by a area such that each area is the same for each body, whereby a resistance value of each resistance body is the same. When the pen axis is inclined, the conductive liquid moves with respect to the curved concave face of the reversed circular cone section so as to maintain the top surface of the conductive liquid horizontal so that a contacting area of the conductive liquid and each resistance body is different from one another. Therefore, a resistance value of each resistance body changes, and an inclination angle and a inclination direction of the pen axis can be detected based upon the change in the resistance value for each body.

An inclination sensor according to a eighth embodiment of the invention comprises a case body, a curved cavity section formed within the case body, a resistance body which is provided on the curved cavity section and which has a shape which is coincident to the shape of the curved cavity section, and a marker which is hung down from an upper position with respect to the curved cavity section so that the marker contacts and slides on the resistance body, the marker having a conductive body and a ball shape.

When this inclination sensor is employed in a handwriting detecting and storing device, and when the pen axis is vertical with respect to a surface for writing, the marker is positioned at a center (an axial center of the pen axis and the lowermost section) on the curved cavity section (that is, the resistance body). When the pen axis is inclined, the marker contacts and moves on the resistance body so that a contacting point of the marker with the resistance body changes. Therefore, a resistance value is measured between a edge section of the conductive body in its supporting point side and an uppermost edge section of the resistance body, and an inclination angle of the pen axis is detected based upon a change in the resistance value. But, an inclination direction of the pen axis cannot be detected.

### Brief Description of The Drawings

Figure 1(a) is a schematic diagram illustrating a main section of a handwriting detecting and storing device in which an inclination sensor according to the first embodiment of the invention is employed, where the device is determining its pen axis to be vertical with respect to a surface for writing,
Figure 1(b) is a schematic diagram illustrating a main section of a handwriting detecting and storing device in which an inclination sensor according to the first embodiment of the invention is employed, where the device is determining its pen axis to be inclined with respect to a surface for writing,
Figure 2(a) is a diagram illustrating a detected (i.e., observed) image when the pen axis is determined by an embodiment of the invention to be vertical with respect to the surface for writing,
Figure 2(b) is a diagram illustrating a detected image when the pen axis is determined by the embodiment of the invention to be inclined with respect to the surface for writing,
Figure 3 is a schematic diagram illustrating a leading edge section of the handwriting detecting and storing device,
Figure 4 is a side view illustrating a leading edge section of the handwriting detecting and storing device,
Figure 5 is a schematic diagram illustrating a leading edge section of a handwriting detecting and storing device in which an inclination sensor according to the second embodiment of the invention is employed,
Figure 6 is a horizontal cross sectional view illustrating a pen axis maintaining plate provided in a leading edge section of a handwriting detecting and storing device in which an inclination sensor according to the third embodiment of the invention is employed,
Figure 7 is a horizontal cross sectional view illustrating a pen axis maintaining plate provided in a leading edge section of a handwriting detecting and storing device in which an inclination sensor according to the fourth embodiment of the invention is employed,
Figure 8 is a schematic diagram illustrating a leading edge section of a handwriting detecting and storing device in which an inclination sensor according to the fifth embodiment of the invention is employed,
Figure 9 is a schematic diagram illustrating a leading edge section of a handwriting detecting and storing device in which an inclination sensor according to the sixth embodiment of the invention is employed,
Figure 10(a) is a schematic diagram illustrating a main section of a handwriting detecting and storing device in which an inclination sensor according to the seventh embodiment of the invention is employed, where the device is determining its pen axis to be vertical with respect to a surface for writing,
Figure 10(b) is a schematic diagram illustrating a main section of a handwriting detecting and storing device in which an inclination sensor according to the seventh embodiment of the invention- is employed, where the device is determining its pen axis to be inclined with respect to a surface for writing,
Figure 11 is a top face view of the main section which is illustrated in Fig. 10(a), and
Figure 12 is a perspective view illustrating a main section of a handwriting detecting and storing device in which an inclination sensor according to the eighth embodiment of the invention is employed.

### Preferred Embodiments of The Invention

Hereinafter, we explain the present invention based upon the disclosed embodiments.

It will be understood by those of ordinary skill in the art that, for the purpose of simplifying the description of the invention, the following explanation assumes that the writing surface is parallel to the ground (i.e., is horizontal).

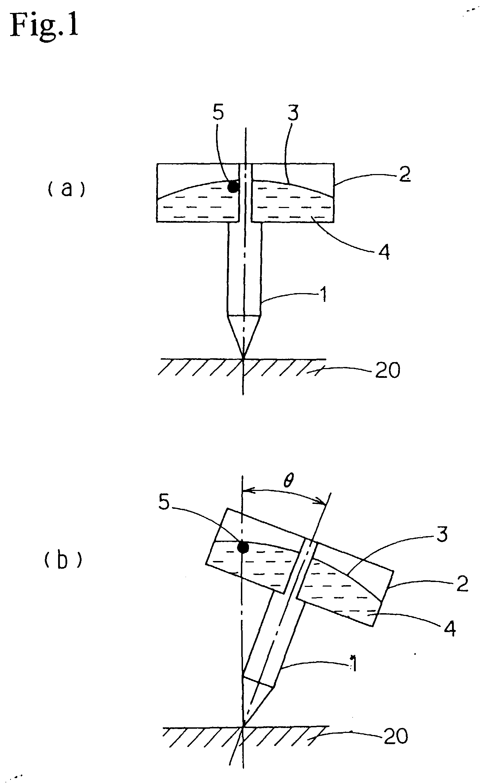

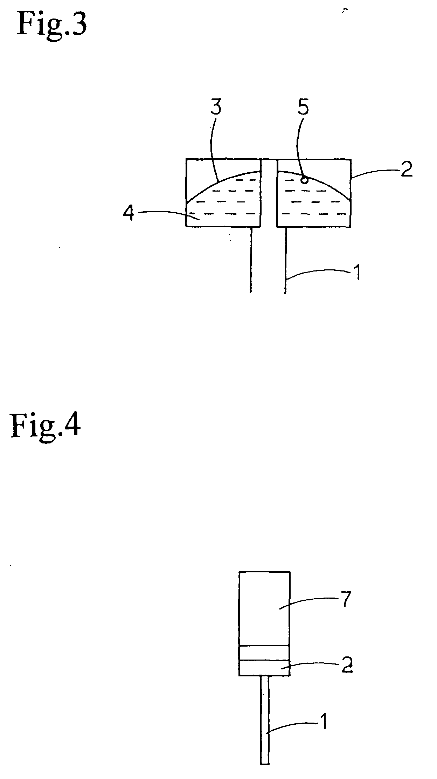

Fig. 1(a) is a schematic diagram illustrating a main section of a handwriting detecting and storing device in which an inclination sensor according to the first embodiment of the invention is employed, where the device is determining its pen axis to be vertical with respect to a surface for writing, while Fig. 1(b) is a schematic diagram illustrating a main section of a handwriting detecting and storing device in which an inclination sensor this embodiment is employed, where the device is determining its pen axis to be inclined with respect to a surface for writing. Further, Fig. 3 is a schematic diagram illustrating a leading edge section of the handwriting detecting and storing device.

The handwriting and storing device has a characteristic point in that deformation of an image is corrected using an inclination sensor. The handwriting and storing device has a conventional arrangement other than the inclination sensor. Therefore, discussion of the handwriting and storing device according to the present invention will be directed mainly to the inclination sensor.

A body (not shown) of the handwriting and storing device has a lens system 7 at its leading edge section and a pen shaft holding plate 2 at a lower position of the body with respect to the lens system 7. The lens system 7 is a part of a handwriting detection means which detects a locus of a character, figure and the like which is written by a writing means (pen). The pen shaft holding plate 2 supports the pen shaft 1 in a projecting manner from the body.

In Figs. 1(a) and 1(b), the pen shaft holding plate 2 for supporting the pen shaft 1 is permeable to light (i.e., transparent or translucent) and has a circular plate shape. The pen shaft holding plate 2 also has a cavity section 3 therein which has a curved convex shape at its upper face. The cavity section 3 is filled with a fluid body 4 having a predetermined viscosity. A marker 5 having a ball shape is also provided within the cavity section 3 in a floating condition within the fluid body 4. The marker is impermeable to light (i.e., opaque), and has a specific gravity which is smaller than a specific gravity of the fluid body 4.

As is apparent from Figs. 1(a) and 1(b), a central axis of the pen shaft 1 passes through a center (an uppermost point) of the curved convex face, and the pen shaft 1 is projected from the pen shaft holding plate 2 in a vertical lower direction. Further, the marker 5 always floats so as to contact the curved convex face of the cavity section 3 due to a difference between the specific gravities.

When the handwriting and storing device is employed, and when the pen shaft 1 is kept in a vertical posture with respect to a writing face 20, as is illustrated in Fig. 1(a), the marker 5 is positioned at the uppermost portion of the curved convex face of the cavity section 3. In other words, the marker 5 is positioned at a neighboring position with respect to the pen shaft 1. Under this condition, an image which is illustrated in Fig, 2(a) is the image which is detected by a CCD (charge coupled device) device, for example. The detected image 30 includes an image 1' representing the pen shaft 1 at a center thereof and an image 5' representing the marker 5 which image 5' is at a neighboring position with respect to the image 1'.

When the pen shaft 1 is inclined to a right side by an angle of θ, as is illustrated in Fig. 1(b), the marker 5 moves along the curved convex face of the cavity section 3 and is positioned at an uppermost portion of the curved convex face which is in the inclined condition. Under this condition, the detected image is the image which is illustrated in Fig, 2(b). That is, the image 5' representing the marker 5 is positioned at a location which is apart from the image 1' representing the pen shaft 1 in the left direction by a length of d within a detected image 30, the image 1' being positioned at a center of the detected image 30.

A shift of the image 5' is in proportion with an inclination angle of θ of the pen shaft 1. Therefore, an inclination angle and an inclination direction of the pen shaft 1 are easily detected based upon the shifting length d and the shifting of the image 5'. Further, the fluid body 4 has adequate viscosity so that the position of the marker 5 is not disturbed by fine vibrations and the like. Therefore, unnecessary information such as the vibration of the pen shaft 1 and the like is prevented from being detected erroneously.

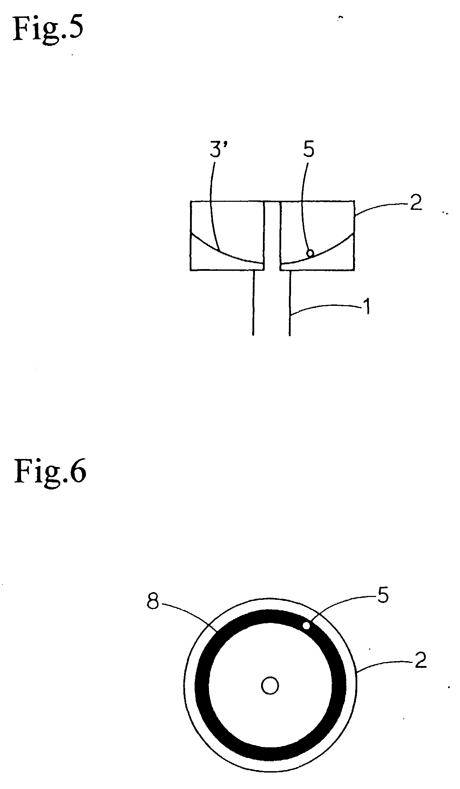

Fig. 5 is a schematic diagram illustrating a leading edge section of a handwriting detecting and storing device in which an inclination sensor according to the second embodiment of the invention is employed.

In this handwriting detecting and storing device, a pen shaft holding plate 2 which is permeable to light (i.e., transparent or translucent) and has a circular plate shape has a cavity section 3' therein which has a lower face having a curved concave shape. A marker 5 being impermeable to light (i.e., opaque) and having a ball shape is provided within the cavity section 3'.

When this handwriting and storing device is employed, and when the pen shaft 1 is a vertical posture with respect to the writing face, the marker 5 is positioned at the lowermost portion of the cavity section 3. Under this condition, the detected image is illustrated in Fig, 2(a).

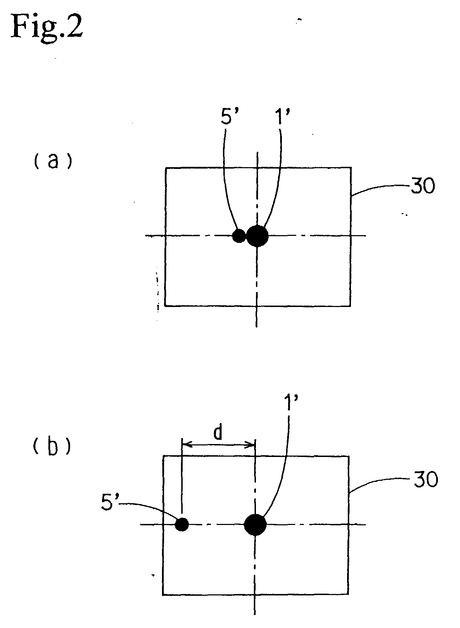

When the pen shaft 1 is inclined to a right side, for example, the marker 5 moves along the curved concave face of the cavity section 3' and is positioned at a lowermost portion of the curved convex face which is in the inclined condition. An image 5' representing the marker 5 is positioned on a right side with respect to an image 1 representing the pen shaft 1 within the detected image illustrated in Fig. 2(b). Therefore, an inclination angle and an inclination direction of the pen shaft 1 are easily detected based upon the shifting length d and the shifting of the image 5' which operation is similar to the operation of the previous embodiment.

Fig. 6 is a horizontal cross sectional view illustrating a pen axis maintaining plate provided in a leading edge section of a handwriting detecting and storing device in which an inclination sensor according to the third embodiment of the invention is employed.

This handwriting and storing device has a groove 8 having a ring shape. The groove 8 is formed on an outer peripheral portion of the pen shaft holding plate 2. A marker 5 is provided in the groove 8 in a rotatable and movable manner.

When this handwriting and storing device is employed, the marker 5 rotates and moves within the groove 8 according to inclined direction of the pen shaft 1 with respect to the writing face. The marker 5 is finally positioned at a lowermost portion of the groove 8 which is in the inclined condition. Therefore, an inclination direction of the pen shaft 1 is detected based upon the position of the marker 5. However, the marker 5 is always apart from the central axis of the pen shaft 1 by a constant distance so that the inclination angle of the pen shaft 1 cannot be detected.

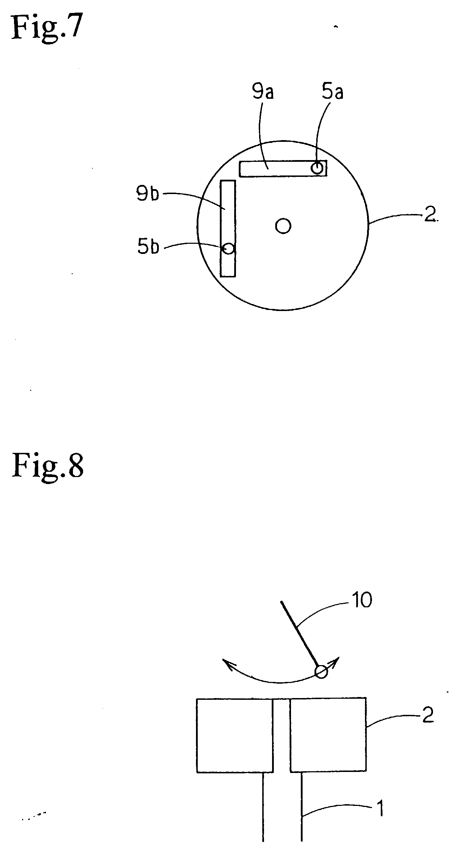

Fig. 7 is a horizontal cross sectional view illustrating a pen axis maintaining plate provided in a leading edge section of a handwriting detecting and storing device in which an inclination sensor according to the fourth embodiment of the invention is employed.

This handwriting and storing device has two grooves 9a and 9b, each groove being formed on a pen shaft holding plate 2 except the pen shaft 1 passes through the shaft holding plate 2. Each groove extends in a direction which crosses at a right angle to the other. The handwriting and storing device also has two markers 5a and 5b, each marker being provided in a corresponding groove in a rotatable and movable manner. When two grooves 9a and 9b are disposed in an X-coordinate direction and a Y-coordinate direction, respectively, for example, a position of the marker 5a within the groove 9a and a position of the marker 5b within the groove 9b change depending upon an inclination condition of the pen shaft 1. When the pen shaft 1 is inclined to a right side relative to Fig. 7, the marker 5a moves to the right side, while the marker 5b does not change its position. When the pen shaft 1 is inclined to a right-up side relative to Fig. 7, the marker 5a moves to the right side, while the marker 5b moves up. The up direction is the up direction shown in Fig. 7. Therefore, the inclination direction of the pen shaft 1 is detected based upon the positions of the markers 5a and 5b. However, the inclination angle of the pen shaft 1 is not detected.

Fig. 8 is a schematic diagram illustrating a leading edge section of a handwriting detecting and storing device in which an inclination sensor according to the fifth embodiment of the invention is employed.

This handwriting detecting and storing device has a marker 10 which is hung from an upper position with respect to a pen shaft holding plate 2 towards an upper face of the pen shaft holding plate 2 in a swingable manner. Further, a hanging position is determined so that the hanging end of the marker 10 is positioned on the central axis of the pen shaft 1 when the pen shaft 1 is in a vertical posture with respect to the writing face.

The marker 10 always hangs in the vertical direction despite the inclination condition of the pen shaft 1 so that a relative position of the marker 10 with respect to the pen shaft holding plate 2 changes in correspondence to the inclination condition of the pen shaft 1. Therefore, a relationship between an image representing the pen shaft 1 and an image representing the marker 10 within an image detected by a CCD device becomes a relationship which is illustrated in Figs. 2(a) and 2(b), for example. As a result, the inclination angle and the inclination direction of the pen shaft 1 are detected with an operation similar to the operation of the first embodiment or second embodiment.

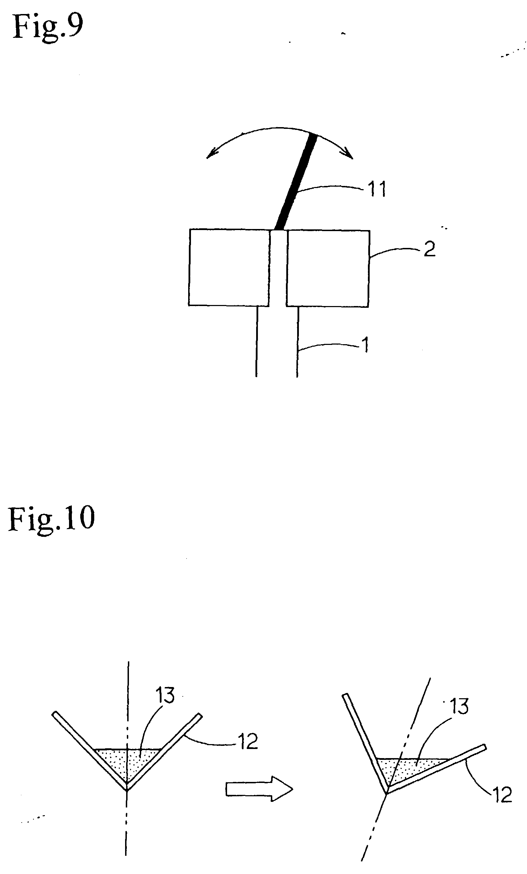

Fig. 9 is a schematic diagram illustrating a leading edge section of a handwriting detecting and storing device in which an inclination sensor according to the sixth embodiment of the invention is employed.

This handwriting and storing device has a marker 11 which has a stick shape and stands on a pen shaft holding plate 2 at a central axis of a pen shaft 1 in a swingable manner. The lower edge of the marker 11 is a supporting point.

The marker 11 moves in every direction with respect to an upper face of the pen shaft holding plate 2 following the inclination of the pen shaft 1 so that a relationship between an image representing the pen shaft 1 and an image representing the marker 10 within an image detected by a CCD device becomes a relationship which is illustrated in Figs. 2(a) and 2(b), for example. As a result, an inclination angle and an inclination direction of the pen shaft 1 can be detected.

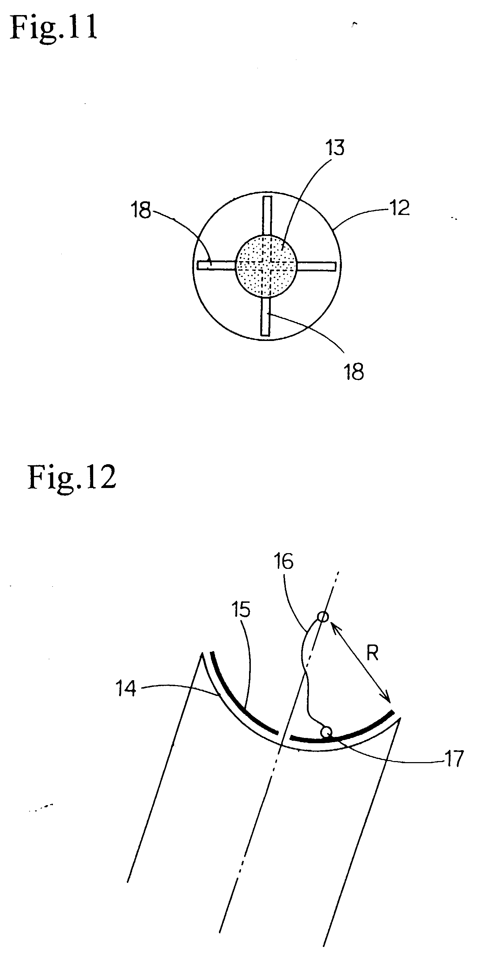

Fig. 10(a) is a schematic diagram illustrating a main section of a handwriting detecting and storing device in which an inclination sensor according to the seventh embodiment of the invention is employed, where the device is determining its pen axis to be vertical with respect to a surface for writing, while Fig. 10(b) is a schematic diagram illustrating a main section of a handwriting detecting and storing device in which an inclination sensor according to this embodiment is employed, where the device is determining its pen axis to be inclined with respect to a surface for writing. And, Fig. 11 is a top face view of the main section which is illustrated in Fig. 10(a).

This handwriting device has a reversed cone section 12 which is provided at an adequate portion of a case body for supporting a pen. A fluid body 13 having a set conductivity is housed on a curved concave face side of the reversed cone section 12. The reversed cone section 12 preferably has at least four resistance bodies 18 on the curved concave face thereof. Each resistance body 18 has a belt shape and extends from a bottom center (cone point) of the reversed cone section 12 to an outer periphery of the reversed cone section 12. Each resistance body 18 crosses at a right angle to another. In this embodiment, four resistance bodies 18 are provided from the cone point, and a distance in angle between the resistance bodies is determined to be equal (90 degrees). A lower portion of each resistance body 18 is dipped in the fluid body 13 having conductivity so that the dipped portions of the resistance bodies 18 are in a short-circuit condition. An upper portion of each resistance body 18 is out of the fluid body 13 having conductivity so that the upper portion of each resistance body 18 acts as a resistor which has a resistance value corresponding to the length of the upper portion out of the fluid body 13. Further, a width and a length of each resistance body 18 are determined to be equal to the others. Also, a total resistance value of each resistance body 18 is determined to be equal to the others.

When the pen shaft 1 is in a vertical posture with respect to the writing face {refer to Fig. 10(a)}, the reversed cone section 12 is synchronous with respect to a vertical axis so that a contacting area (dipped area) of each resistance body 18 and the fluid body 13 having conductivity is the same. When the pen shaft 1 is inclined {refer to Fig. 10(b)} with respect to the writing face, the reversed cone section 12 is inclined accordingly and the fluid body 13 moves so that the top face of the fluid body 13 is maintained horizontal.

Therefore, an inclination angle and an inclination direction of the pen shaft 1 can be detected by measuring a resistance value between edge sections of each resistance body 18 having a belt shape and detecting a change in the resistance value of each resistance body 18. Further, the inclination angle and the inclination direction can be more accurately detected by increasing the number of the resistance bodies 18.

Fig. 12 is a perspective view illustrating a main section of a handwriting detecting and storing device in which an inclination sensor according to the eighth embodiment of the invention is employed.

The handwriting and storing device has a curved cavity section 14 which is formed at an adequate portion of a case body of the handwriting detecting and storing device. The curved cavity section 14 has one or more resistance bodies 15 each having a curved concave shape which is the same as the others. The handwriting detecting and storing device further has a marker 17 over the curved cavity section 14 which is hung down by a conductor body 16 so that the marker 17 contacts and moves on a resistance body 15. The marker 17 also has a set conductivity and a ball shape. Further, the conductor body 16 is connected so that contacting and moving of the marker 17 are not prevented.

When the handwriting detecting and storing device is employed, the marker 17 contacts and moves on a resistance body 15 in correspondence to the inclination condition of the pen shaft 1. Therefore, the inclination angle of the pen shaft 1 can be detected by measuring a resistance value R between the marker 17 and an edge section at the supporting point side of the conductor body 16 and detecting a change in resistance value R, for example. But, the inclination direction of the pen shaft 1 is not detected.

As is apparent from each handwriting detecting and storing device, changes in the pen shaft holding angle due to a writer during writing are detected in a time-sequential manner when handwriting is input in the handwriting detecting and storing device, so that the changes in the pen shaft holding angle are stored in correspondence to image information of the handwriting. Therefore, deformation in a detected image is accurately corrected. When the stored image information is reproduced using a reproducing apparatus, the reproduced image becomes an image which is accurately corrected so that accuracy in reproducing handwriting is improved. Further, the deformation correcting means can have a simple arrangement and an operation for image processing becomes easy.

In the above embodiments, the curved convex face or the curved concave face are represented as a part of a spherical surface, but the curved convex face or the curved concave face may be a cycloid curvature face. Further, in the above embodiments, the inclination sensor is applied to the handwriting detecting and storing device, but the inclination sensor may be applied to a general machinery apparatus, an architectural structure and the like other than the handwriting detecting and storing device so that it is effective that inclination angles are detected in a time-sequential manner when the machinery apparatus, architectural structure or the like gradually inclines.

The case body in the present invention represents a case body for supporting a pen when the inclination sensor is applied to handwriting detecting and storing device, while the case body represents a structure body such as a housing, casing or the like when the inclination sensor is applied to a general machinery apparatus, architectural structure or the like.

## Claims

1. An inclination sensor, comprising:
a case body;
a maintaining plate mounted on the case body, the maintaining plate being permeable to light and defining a cavity section therein such that a face of the maintaining plate which defines an upper surface of the cavity has a convexly curved shape;
a fluid filling the cavity section, the fluid having a pre-determined viscosity; and
a first marker provided within the cavity section, the first marker being impermeable to light and having a specific gravity smaller than a specific gravity of the fluid such that the first marker floats on the surface of the fluid.

2. An inclination sensor, comprising:
a case body;
a maintaining plate mounted on the case body, the maintaining plate being permeable to light and defining a cavity section therein such that a face of the maintaining plate which defines a lower surface of the cavity has a concavely curved shape; and
a first marker provided within the cavity section such that the first marker is freely movable over the concavely curved face as an angle of a central axis of the case body deviates relative to a vertical direction, the first marker being impermeable to light.

3. An inclination sensor, comprising:
a case body;
a maintaining plate mounted on the case body, the maintaining plate being permeable to light and defining a first groove therein; and
a first marker provided within the first groove such that the first marker is freely movable within the first groove as an angle of a central axis of the case body deviates relative to a vertical direction, the first marker being impermeable to light.

4. An inclination sensor as recited in claim 3, wherein the first groove is circular, having a center on the central axis of the case body.

5. An inclination sensor as recited in claim 3 or 4, further including:
a second groove defined in the maintaining plate; and
a second marker provided within the second groove such that the second marker is freely movable within the second groove as the angle of a central axis of the case body deviates relative to a vertical direction, the second marker being impermeable to light;
wherein the first groove is straight and extends in a first direction, and the second groove is straight and extends in a second direction differing from the first direction by 90°.

6. An inclination sensor as recited in one of claims 1 to 5, further including a measurement device for measuring a position of the first marker, wherein the measurement device preferably includes a charge coupled device or a camera.

7. An inclination sensor as recited in one of claims 3 to 6, further including a third marker, the third marker being impermeable to light and permanently positioned on a central axis of the case body.

8. An inclination sensor as recited in one of claims 1 to 7, wherein the first marker has a spherical shape and/or wherein the maintaining plate has a circular shape.

9. An inclination sensor, comprising:
a case body;
a maintaining plate mounted on the case body, the maintaining plate being permeable to light; and
an elongated marker mounted at one end thereof on a central axis of the case body, such that the marker is freely swingable above the maintaining plate as an angle of the central axis of the case body deviates relative to a vertical direction, the marker being impermeable to light.

10. An inclination sensor as recited in claim 9, wherein the mounted end of the marker is mounted to the maintaining plate.

11. An inclination sensor as recited in claim 9, wherein the mounted end of the marker is mounted to a position above the maintaining plate, preferably including a measurement device for measuring a position of the marker and wherein preferably the measurement device includes a charge coupled device or a camera and wherein the maintaining plate preferably has a circular shape.

12. An inclination sensor, comprising:
a case body;
a conical vessel provided on the case body, such that a vertex of the vessel is directed in a downward direction of the case body;
a plurality of resistance bodies provided within the vessel; and
a conductive liquid housed within the vessel, such that, as an angle of the central axis of the case body deviates relative to a vertical direction, contact between the liquid and the resistance bodies changes so as to change a measurable resistance of each resistance body.

13. An inclination sensor as recited in claim 12, having four resistance bodies, each resistance body extending from the vertex of the vessel along a side of the vessel in a direction differing by 90° from the adjacent resistance body and/or wherein each resistance body has a same shape and resistivity, preferably further including a resistance measurement device for measuring the resistance of each resistance body.

14. An inclination sensor, comprising:
a case body;
a concavely curved vessel mounted on the case body;
a resistance body provided in the concavely curved vessel and having a shape which is coincident with a shape of the vessel;
a marker suspended from a position above the vessel by a conductive body so that the marker contacts the resistance body and is freely movable along a surface of the resistance body whereby, as an angle of the central axis of the case body deviates relative to a vertical direction, a contact position between the marker and the resistance body changes so as to change a measurable resistance of the resistance body.

15. An inclination sensor as recited in claim 14, wherein the marker has a spherical shape and/or wherein the concavely curved vessel has a cycloid curvature.
